# EUROPÄISCHE PATENTSCHRIFT

(11) **EP 3 374 205 B1**
(45) Veröffentlichungstag und Bekanntmachung des Hinweises auf die Patenterteilung: **04.12.2019**
(21) Anmeldenummer: 17710244.9
(22) Anmeldetag: 10.03.2017
(51) Int. Cl.: B60C 23/04

(54) **VERFAHREN ZUM AUSLESEN VON IN EINER REIFENDRUCKÜBERWACHUNGSEINHEIT GESPEICHERTEN REIFENDATEN UND VERFAHREN ZUM SCHREIBEN VON REIFENDATEN IN EINE REIFENDRUCKÜBERWACHUNGSEINHEIT**
METHOD FOR READING TIRE DATA STORED ON A TIRE PRESSURE MONITORING UNIT, AND METHOD FOR WRITING TIRE DATA INTO A TIRE PRESSURE MONITORING UNIT
PROCÉDÉ DE LECTURE DE DONNÉES DE PNEUMATIQUES STOCKÉES DANS UNE UNITÉ DE CONTRÔLE DE LA PRESSION DES PNEUMATIQUES, ET PROCÉDÉ D'ÉCRITURE DE DONNÉES DE PNEUMATIQUES DANS UNE UNITÉ DE CONTRÔLE DE LA PRESSION DES PNEUMATIQUES

(30) Priorität: 23.03.2016 DE 102016105427
(43) Veröffentlichungstag der Anmeldung: 19.09.2018
(73) Patentinhaber: Huf Baolong Electronics Bretten GmbH, 75015 Bretten (DE)
(72) Erfinder: OTT, Heinrich, 71701 Schwieberdingen (DE); VÖGELI, Patrick, 75015 Bretten-Gölshausen (DE); WAGNER, Markus, 71638 Ludwigsburg (DE)
(74) Vertreter: Twelmeier Mommer & Partner
(86) Internationale Anmeldenummer: PCT/EP2017/055731
(87) Internationale Veröffentlichungsnummer: WO 2017/162451

(56) Entgegenhaltungen:
- US-A1- 2004 230 350
- US-B1- 6 430 484

## Beschreibung

Die Erfindung betrifft ein Verfahren zum Auslesen von in einer Reifendrucküberwachungseinheit gespeicherten Reifendaten sowie ein Verfahren zum Schreiben von Reifendaten in eine Reifendrucküberwachungseinheit. Ein Verfahren mit den im Oberbegriff des Anspruchs 1 angegebenen Merkmalen ist aus US 2004/230350 A1 sowie US 6 430 484 B1 bekannt.

Reifendrucküberwachungseinheiten werden an Fahrzeugrädern montiert, beispielsweise am Ventil, um den Reifendruck zu messen und drahtlos an eine zentrale Auswerteeinheit des Fahrzeugs zu übertragen.

In der DE 10 2014 210 017 A1 wurde vorgeschlagen, in einer Reifendrucküberwachungseinheit Reifendaten, beispielsweise Reifendimensionen, DOT-Nummer oder Geschwindigkeitsindex, zu speichern, damit einem Fahrzeug diese Reifeninformationen automatisiert zur Verfügung gestellt werden können und für verschiedene Funktionen genutzt werden können, beispielsweise für Fahrdynamikregelsysteme.

Da Fahrzeugreifen immer wieder ausgetauscht werden, müssen Reifendaten bei einem entsprechenden System grundsätzlich bei jedem Fahrtbeginn von der Reifendrucküberwachungseinheit an eine Zentraleinheit des Fahrzeugs gesendet werden. Dies wird als Auslesen von Reifendaten bezeichnet, die in der Reifendrucküberwachungseinheit gespeichert sind. Dementsprechend wird das Übertragen von Reifendaten, die in einer Reifendrucküberwachungseinheit abgespeichert werden sollen, als Schreiben von Reifendaten bezeichnet

Aufgabe der vorliegenden Erfindung ist es, einen Weg aufzuzeigen wie Reifendaten effizient ausgelesen werden können, insbesondere die dafür erforderliche Sendetätigkeit der Reifendrucküberwachungseinrichtung möglichst klein gehalten werden kann. Zudem soll ein Weg aufgezeigt werden, wie Reifendaten effizient in eine Reifendrucküberwachungseinheit geschrieben werden können.

Diese Aufgabe wird durch ein Verfahren mit den im Anspruch 1 angegebenen Merkmalen gelöst. Vorteilhafte Weiterbildungen der Erfindung sind Gegenstand von Unteransprüchen. Ein Verfahren zum Schreiben von Reifendaten ist Gegenstand des Anspruchs 9.

Bei einem erfindungsgemäßen Verfahren zum Auslesen von Reifendaten werden Reifendaten von der Reifendrucküberwachungseinheit als eine Folge von mehreren Datentelegrammen, die jeweils einen Teil der Reifendaten enthalten, ausgesendet. Dabei enthält jedes Datentelegramm der Folge eine charakteristische Kennung, und wenigstens ein Prüfbit. Die charakteristische Kennung ermöglicht es, das Datentelegramm eindeutig der aussendenden Reifendrucküberwachungseinheit zuzuordnen, und kann beispielsweise eine Identifikationsnummer sein, die bevorzugt eine Länge von wenigstens 8 Byte hat. Da das Datentelegramm ein oder mehrere Prüfbits enthält, können eventuelle Übertragungsfehler zuverlässig erkannt werden, beispielsweise durch eine zyklische Redundanzprüfung (cyclic redundancy check CRC).

Jedes Datentelegramm der Folge enthält also nicht nur einen Teil der zu übertragenden Reifendaten, sondern zusätzlich auch weitere Informationen, insbesondere die charakteristische Kennung, die in der Regel einen erheblichen Teil der Gesamtlänge des Telegramms ausmachen, beispielsweise ein Drittel oder mehr. Obwohl sich mit der Anzahl der Telegramme die Gesamtmenge der zu sendenden Informationen erheblich vergrößert, ist die zum Übertragen der Reifeninformationen erforderliche Sendetätigkeit bei einem erfindungsgemäßen Verfahren wesentlich kleiner als bei einer herkömmlichen Übertragung, bei der die Reifendaten vollständig in einem einzigen Datentelegramm gesendet werden. Dies liegt daran, dass mit der Länge eines Datentelegramms die Wahrscheinlichkeit einer fehlerhaften Übertragung ansteigt und im Falle einer fehlerhaften Übertragung eine erneute Überragung erforderlich ist.

Die Reifendaten können vom Hersteller eines Reifen in einer maschinenlesbaren Form, beispielsweise als QR-Code, an dem Reifen angebracht werden, beispielsweise auf einem Etikett. Die Reifendaten können dann mit einem geeigneten Gerät gelesen und an die Reifendrucküberwachungseinheit gesendet werden. Empfangene Reifendaten werden in der Reifendrucküberwachungseinheit bevorzugt ohne Verarbeitung, so wie sie als Bitfolge empfangen wurden, in einem Speicher abgelegt. Die Reifendaten können dabei als Folge von mehreren Datentelegrammen gemäß Anspruch 9 an die Reifendrucküberwachungseinheit gesendet werden. Ein erfindungsgemäßes Verfahren zum Auslesen von Reifendaten kann mit einem erfindungsgemäßen Verfahren zum Schreiben von Reifendaten kombiniert werden. Es ist aber auch möglich ein erfindungsgemäßes Verfahren zum Auslesen von Reifendaten mit einem anderen Verfahren zum Schreiben von Reifendaten zu kombinieren und umgekehrt.

Bevorzugt enthalten die Reifendaten beispielsweise die Reifendimensionen (z.B. Reifenbreite, Querschnittverhältnis, Felgendurchmesser), Last Index, Geschwindigkeitsindex, Typ sowie Herstellungsdaten (z.B. Zeit und Ort). Insgesamt können die Reifendaten 15 Bytes oder mehr umfassen. Beispielsweise können die Reifendaten eines Reifens 18 bis 20 Bytes ausmachen.

Eine vorteilhafte Weiterbildung der Erfindung sieht vor, dass die Reifendaten als eine Folge von wenigstens 3 Datentelegrammen übertragen werden. Bevorzugt werden die Reifendaten als eine Folge von 4 oder mehr Datentelegrammen übertragen. Auf diese Weise lässt sich verhindern, dass die einzelnen Datentelegramme eine so große Länge bekommen, dass Übertragungsfehler in einem erheblichen Maße auftreten.

Eine weitere vorteilhafte Weiterbildung der Erfindung sieht vor, dass die Datentelegramme der Folge jeweils wenigstens 4 Bytes Reifendaten enthalten. Beispielsweise kann jedes Datentelegramm der Folge 5 oder mehr Bytes enthalten. Auf diese Weise kann ein unwirtschaftliches Aussenden von Datentelegrammen vermieden werden.

Eine weitere vorteilhafte Weiterbildung der Erfindung sieht vor, dass keines der Datentelegramme der Folge mehr als 9 Bytes Reifendaten enthält. Beispielsweise können die Datentelegramme der Folge jeweils 8 Bytes Reifendaten oder weniger enthalten. Auf diese Weise lässt sich vermeiden, dass die Datentelegramme eine so große Länge haben, dass das Risiko einer fehlerhaften Übertragung nicht unerheblich ist.

Abfragesignale, mit denen eine Reifendrucküberwachungseinheit zum Aussenden von Datentelegrammen veranlasst wird, können als LF-Signale ausgesandt werden, also als Signal im Frequenzbereich von 30 kHz bis 500 kHz. Die Reifendrucküberwachungseinheit sendet Datentelegramme im HF-Bereich, beispielsweise mit 433 MHz.

Weitere Einzelheiten und Vorteile der Erfindung werden an einem Ausführungsbeispiel unter Bezugnahme auf die beigefügten Zeichnungen erläutert.
- Fig. 1: zeigt schematisch ein Beispiel für den Ablauf des Auslesens von Reifendaten; und
- Fig. 2: zeigt schematisch ein Beispiel für den Ablauf des Schreibens von Reifendaten.

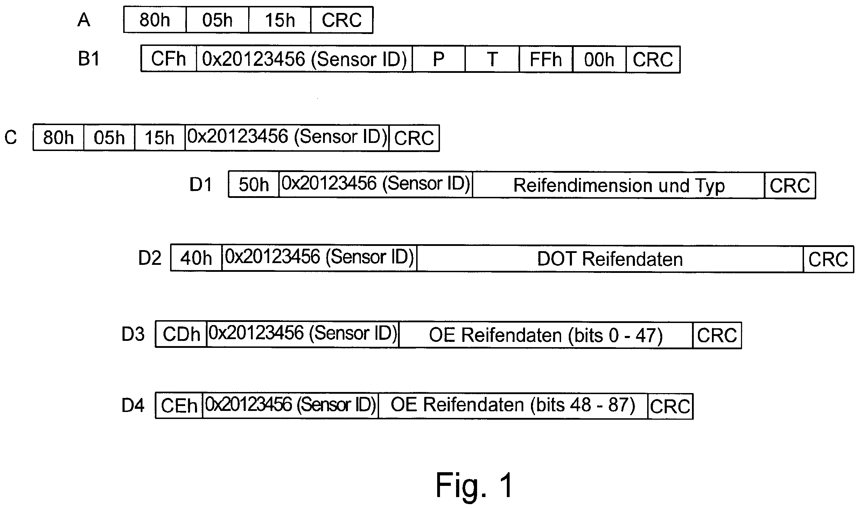

Das Auslesen von in einer Reifendrucküberwachungseinheit gespeicherten Reifendaten wird bei dem in Fig. 1 gezeigten Beispiel mit einem Abfragesignal A begonnen, das von der Zentraleinheit eines Fahrzeugs ausgesandt werden kann. Das Abfragesignal A enthält ein Kommando, das die Reifendrucküberwachungseinheit veranlasst, ein Datentelegramm B1 mit einer Statusinformation auszusenden. Zusätzlich kann das Abfragesignal A Identifier, z.B. Service Identifier SID und Local Identifier, sowie ein oder mehrere Prüfbits, beispielsweise für eine zyklische Redundanzprüfung CRC, enthalten.

Das Datentelegramm B1 mit der Statusinformation enthält eine charakteristische Kennung der Reifendrucküberwachungseinheit (Sensor ID), sowie eine Information darüber, ob in der Reifendrucküberwachungseinheit Reifendaten vorliegen. Zusätzlich kann das Datentelegramm B1 Informationen über den Reifendruck p und die Temperatur T enthalten, ein oder mehrere Prüfbits sowie einen Kopf, der angibt, welche Informationen in dem Datentelegramm enthalten sind, also einen Typ des Datentelegramms angibt.

Die Information darüber, ob in der Reifendrucküberwachungseinheit Reifendaten vorliegen, kann beispielsweise lauten, dass Reifendaten vollständig vorliegen, teilweise vorliegen oder gar nicht vorliegen. Falls keine Reifendaten vorliegen, kann zusätzlich auch ein Grund für das Fehlen von Reifendaten angegeben werden, beispielsweise, dass die Reifendrucküberwachungseinheit noch keine Reifendaten erhalten hat oder dass die Reifendaten gelöscht wurden. Eine Löschung kann beispielsweise erfolgen, weil der gemessene Luftdruck unter eine kritische Schwelle gefallen ist. Durch eine solche Löschung kann verhindert werden, dass nach einem Reifenwechsel in der Reifendrucküberwachungseinheit Reifendaten gespeichert sind, die sich auf einen anderen Reifen beziehen.

Vollständige Reifendaten werden auch als ein Satz von Reifendaten bezeichnet. Ein Reifendatensatz enthält beispielsweise die Reifendimensionen (Reifenbreite, Querschnittverhältnis, Felgendurchmesser), Last Index, Geschwindigkeitsindex, Reifentyp (z.B. Winterreifen, Sommerreifen, Run-Flat-Reifen etc.), M+S, sowie Herstellungsdaten (z.B. Zeit und Ort).

Wenn durch ein Datentelegramm B1 mitgeteilt wurde, dass ein Satz Reifendaten vorliegt, kann die Zentraleinheit des Fahrzeugs die Reifendaten auslesen und sendet dazu ein Anforderungssignal C aus, das die charakteristische Kennung der Reifendrucküberwachungseinheit (Sensor ID) enthält. Die Reifendrucküberwachungseinheit mit dieser charakteristischen Kennung antwortet auf diese Anforderungssignal C mit dem Aussenden einer Folgen von Datentelegrammen D1, D2, D3, D4, die jeweils einen Teil des gespeicherten Reifendatensatzes enthalten.

Die Datentelegramme D1, D2, D3, D4 werden in einem zeitlichen Abstand gesendet, so dass zwischen aufeinander folgenden Datentelegrammen jeweils eine Pause ist, beispielsweise eine Pause von 50 ms bis 100 ms. Die Datentelegramme D1, D2, D3, D4 enthalten zusätzlich zu einem jeweils anderen Teil des gespeicherten Reifendatensatzes die charakteristische Kennung der Reifendrucküberwachungseinheit und ein oder mehrere Prüfbits, beispielsweise für CRC. Zudem können die Datentelegramme D1, D2, D3, D4 auch einen Abschnitt enthalten, der angibt, um das wievielte Datentelegramm der Folge es sich handelt. Ein solcher Abschnitt kann beispielsweise als Kopf am Anfang des Datentelegramms angeordnet sein.

Die einzelnen Datentelegramme D1, D2, D3, D4 der Folge enthalten bevorzugt jeweils 4 bis 8 Bytes Reifendaten. Datentelegramme mit weniger Reifendaten sind zwar ebenfalls möglich, aber unwirtschaftlich, da jedes Datentelegramm wegen seiner anderen Bestandteile, insbesondere der charakteristischen Kennung, eine erhebliche Mindestlänge hat und deshalb mit einer entsprechenden Sendetätigkeit und Energieverbrauch verbunden ist. Längere Datentelegramme sind ebenfalls möglich, führen aber zu einem zunehmenden Risiko fehlerhafter Übertragungen. Da fehlerhafte Übertragungen ein wiederholtes Aussenden der Folge erforderlich machen, führen längere Datentelegramme ebenfalls zu einer unwirtschaftlich Sendetätigkeit.

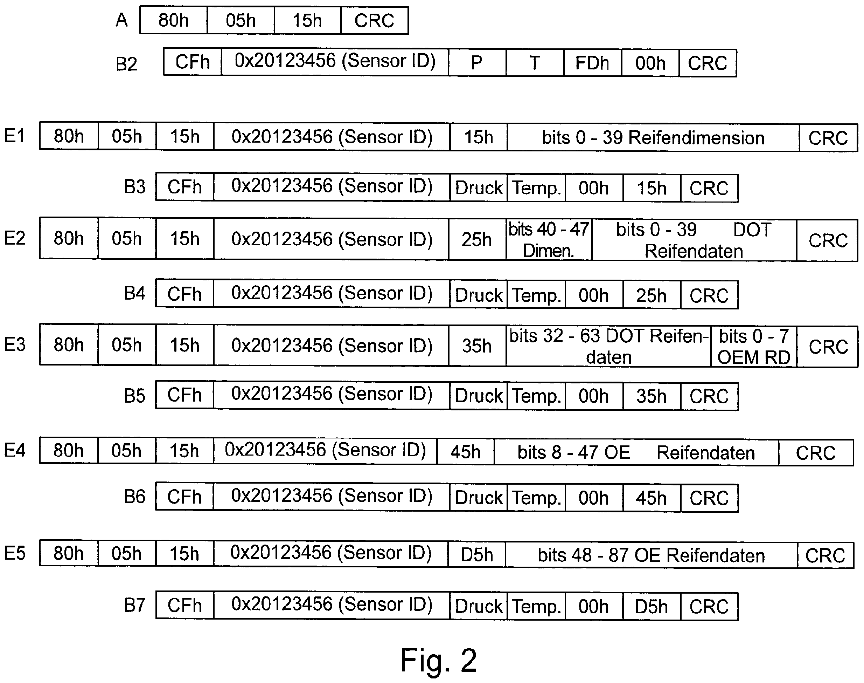

In Fig. 2 ist schematisch ein Beispiel für den Ablauf beim Schreiben von Reifendaten in eine Reifendrucküberwachungseinheit dargestellt. Zunächst wird von einem Gerät, das Reifendaten einlesen kann, beispielsweise von einem QR-Code auf einem Reifenetikett, ein Abfragesignal A an die Reifendrucküberwachungseinheit gesandt. Die Reifendrucküberwachungseinheit antwortet darauf mit dem Aussenden eines Datentelegramms B2, das neben einer charakteristischen Kennung (Sensor ID), eine Information darüber enthält, ob Reifendaten in der Reifendrucküberwachungseinheit vorliegen. In dem gezeigten Beispiel gibt das Datentelegramm mit einem Byte (z.B. FDh) an, dass keine Reifendaten vorliegen. Das Datentelegramm B2 kann dabei wie das Datentelegramm B1 aus Fig. 1 aufgebaut sein und zusätzlich den Reifendruck p und die Temperatur T angeben. In den Beispielen der Figuren 1 und 2 unterscheiden sich die Datentelegramme B1 und B2 nur in ihrem drittletzten Byte, das angibt, ob Reifendaten vorliegen.

Wenn in der Reifendrucküberwachungseinheit keine Reifendaten vorliegen, wird der Reifendrucküberwachungseinheit ein Satz Reifendaten zur Verfügung gestellt. Dazu sendet das Gerät eine Folge von Datentelegrammen E1, E2, E3, E4, E5 aus, die jeweils einen anderen Teil der Reifendaten des Datensatzes enthalten. Der Aufbau dieser Datentelegramme zum Schreiben von Reifendaten kann dem Aufbau der Datentelegramme D1, D2, D3, D4, die eine Reifendrucküberwachungseinheit beim Lesen von Reifendaten aussendet, entsprechen.

Bei dem gezeigten Ausführungsbeispiel enthalten die Datentelegramme E1, E2, E3, E4, E5 die charakteristische Kennung der Reifendrucküberwachungseinheit, für welche die Reifendaten bestimmt sind, und ein oder mehrere Prüfbits, beispielsweise für CRC. Zudem können die Datentelegramme E1, E2, E3, E4, E5 auch einen Abschnitt enthalten, der angibt, um das wievielte Datentelegramm der Folge es sich handelt.

Bei den Datentelegrammen D1, D2, D3, D4, welche die Reifendrucküberwachungseinheit beim Lesen von Reifendaten aussendet, kann ohne Schwierigkeiten eine größere Länge in Kauf genommen werden als bei den Datentelegrammen E1, E2, E3, E4, E5, die beim Schreiben von Reifendaten an die Reifendrucküberwachungseinheit gesendet werden. Dies liegt daran, dass die Datentelegramme E1, E2, E3, E4, E5 als LF-Signale im Frequenzbereich von 30 kHz bis 500 kHz gesendet werden, während die Datentelegramme D1, D2, D3, D4 als HF-Signale beispielsweise im 433 MHz Frequenzband gesendet werden, das weniger anfällig für Übertragungsfehler als das LF-Band ist. Bei dem gezeigten Ausführungsbeispiel werden deshalb zum Schreiben die Reifendaten auf 5 Datentelegramme und zum Lesen auf nur 4 Datentelegramme verteilt.

Die Reifendrucküberwachungsüberwachungseinheit quittiert den Empfang jedes Datentelegramms E1, E2, E3, E4, E5 durch Aussenden eines Statustelegramms B3, B4, B5, B6, B7. Ein solches Statustelegramm bestätigt einen fehlerfreien Empfang eines Datentelegramms bzw. gibt an, dass ein Datentelegramm eben nicht fehlerfrei empfangen wurde, so dass es erneut gesendet werden kann. Zusätzlich enthält ein solches Statustelegramm B3, B4, B5, B6, B7 eine charakteristische Kennung (Sensor ID), ein oder mehrere Prüfbits, beispielsweise für CRC, einen Abschnitt enthalten, der angibt, das wievielte Datentelegramm der Folge empfangen wurde, sowie Reifendruck p und Temperatur T.

## Patentansprüche

1. Verfahren zum Auslesen von in einer Reifendrucküberwachungseinheit gespeicherten Reifendaten, wobei die Reifendrucküberwachungseinheit durch Empfang eines drahtlosen Anforderungssignals (C) zum Aussenden der gespeicherten Reifendaten veranlasst wird, **dadurch gekennzeichnet, dass** die Reifendaten als eine Folge von mehreren Datentelegrammen (D1, D2, D3, D4), die jeweils einen Teil der Reifendaten enthalten, ausgesendet werden, wobei jedes Datentelegramm der Folge eine charakteristische Kennung der Reifendrucküberwachungseinheit und wenigstens ein Prüfbit enthält.

2. Verfahren nach Anspruch 1, **dadurch gekennzeichnet, dass** zwischen den Datentelegrammen (D1, D2, D3, D4) der Folge eine Pause von 50 ms bis 100 ms ist.

3. Verfahren nach Anspruch 1 oder 2, **dadurch gekennzeichnet, dass** die Folge wenigstens drei, vorzugsweise wenigstens vier Datentelegramme (D1, D2, D3, D4) enthält.

4. Verfahren nach einem der vorstehenden Ansprüche, **dadurch gekennzeichnet, dass** das Anforderungssignal (C) die charakteristische Kennung der Reifendrucküberwachungseinheit enthält, die zum Aussenden von Reifendaten veranlasst werden soll.

5. Verfahren nach einem der vorstehenden Ansprüche, **dadurch gekennzeichnet, dass** die Reifendrucküberwachungseinheit durch ein Abfragesignal (A) zum Aussenden einer Statusinformation veranlasst wird, wobei die Statusinformation als ein Datentelegramm (B1) ausgesendet wird, das die charakteristische Kennung und eine Information darüber enthält, ob Reifendaten in der Reifendrucküberwachungseinheit gespeichert sind.

6. Verfahren nach einem der vorstehenden Ansprüche, **dadurch gekennzeichnet, dass** jedes Datentelegramm (D1, D2, D3, D4) der Folge eine Information enthält, die angibt, um das wievielte Datentelegramm der Folge es sich handelt.

7. Verfahren nach einem der vorstehenden Ansprüche, **dadurch gekennzeichnet, dass** jedes Datentelegramm (D1, D2, D3, D4) der Folge wenigstens 4, vorzugsweise wenigstens 5 Bytes Reifendaten enthält.

8. Verfahren nach einem der vorstehenden Ansprüche, **dadurch gekennzeichnet, dass** keines der Datentelegramme (D1, D2, D3, D4) der Folge mehr als 9 Bytes Reifendaten enthält, vorzugsweise keines der Datentelegramme der Folge mehr als 8 Bytes Reifendaten enthält.

9. Verfahren zum Schreiben von Reifendaten in eine Reifendrucküberwachungseinheit, **dadurch gekennzeichnet, dass** die Reifendaten als ein Folge von mehreren Datentelegrammen (E1, E2, E3, E4, E5), die jeweils einen Teil der Reifendaten enthalten, empfangen werden, wobei jedes Datentelegramm (E1, E2, E3, E4, E5) der Folge eine charakteristische Kennung der Reifendrucküberwachungseinheit und wenigstens ein Prüfbit enthält.

10. Verfahren nach Anspruch 9, **dadurch gekennzeichnet, dass** die Reifendrucküberwachungseinheit auf den Erhalt eines Datentelegramms (E1, E2, E3, E4, E5) der Folge jeweils mit einem Datentelegramm (B3, B4, B5, B6, B7) antwortet, das die charakteristische Kennung der Reifendrucküberwachungseinheit, wenigstens ein Prüfbit und eine Information darüber enthält, ob die in dem empfangenen Datentelegramm enthaltenen Reifendaten erfolgreich in einem Speicher der Reifendrucküberwachungseinheit abgelegt wurden.

## Claims

1. A method for reading tire data stored on a tire pressure monitoring unit, wherein the tire pressure monitoring unit is triggered by the receipt of a wireless request signal (C) to transmit the stored tire data, **characterized in that**
the tire data are transmitted as a sequence of a plurality of data strings (D1, D2, D3, D4), which respectively contain a portion of the tire data, wherein each data string of the sequence contains a characteristic identifier of the tire pressure monitoring unit and at least one check bit.

2. The method according to Claim 1, **characterized in that** there is a pause of 50 ms to 100 ms between the data strings (D1, D2, D3, D4) of the sequence.

3. The method according to Claim 1 or 2, **characterized in that** the sequence contains three, preferably at least four, data strings (D1, D2, D3, D4).

4. The method according to any one of the preceding claims, **characterized in that** the request signal (C) contains the characteristic identifier of the tire pressure monitoring unit which is intended to be triggered to transmit tire data.

5. The method according to any one of the preceding claims, **characterized in that** the tire pressure monitoring unit is triggered by a query signal (A) to transmit status information, wherein the status information is transmitted as a data string (B1) which contains the characteristic identifier and information regarding whether tire data are stored in the tire pressure monitoring unit.

6. The method according to any one of the preceding claims, **characterized in that** each data string (D1, D2, D3, D4) of the sequence contains information which specifies the index number of the data string within the sequence.

7. The method according to any one of the preceding claims, **characterized in that** each data string (D1, D2, D3, D4) of the sequence contains at least four, preferably at least five, bytes of tire data.

8. The method according to any one of the preceding claims, **characterized in that** none of the data strings (D1, D2, D3, D4) of the sequence contains more than nine bytes of tire data, preferably that none of the data strings contains more than 8 bytes of tire data.

9. A method for writing tire data into a tire pressure monitoring unit, **characterized in that** the tire data are received as a sequence of a plurality of data strings (E1, E2, E3, E4, E5), which respectively contain a portion of the tire data, wherein each data string (E1, E2, E3, E4, E5) of the sequence contains a characteristic identifier of the tire pressure monitoring unit and at least one check bit.

10. The method according to Claim 9, **characterized in that** the tire pressure monitoring unit responds to the receipt of a data string (E1, E2, E3, E4, E5) of the sequence with a respective data string (B3, B4, B5, B6, B7) which contains the characteristic identifier of the tire pressure monitoring unit, at least one check bit and information regarding whether the tire data contained in the received data string were successfully stored in a storage device of the tire pressure monitoring unit.

## Revendications

1. Procédé de lecture de données de pneumatiques stockées dans une unité de contrôle de la pression des pneumatiques, sachant que l'unité de contrôle de la pression des pneumatiques est amenée à envoyer les données de pneumatiques stockées par la réception d'un signal de demande sans fil (C), **caractérisé en ce que**
les données de pneumatiques sont envoyées sous la forme d'une suite de plusieurs télégrammes de données (D1, D2, D3, D4), qui contiennent respectivement une partie des données de pneumatiques, sachant que chaque télégramme de données de la suite contient une identification caractéristique de l'unité de contrôle de la pression des pneumatiques et au moins un bit de contrôle.

2. Procédé selon la revendication 1, **caractérisé en ce qu'**il y a une pause de 50 ms à 100 ms entre les télégrammes de données (D1, D2, D3, D4) de la suite.

3. Procédé selon la revendication 1 ou 2, **caractérisé en ce que** la suite contient au moins trois, de préférence au moins quatre télégrammes de données (D1, D2, D3, D4).

4. Procédé selon l'une quelconque des revendications précédentes, **caractérisé en ce que** le signal de demande (C) contient l'identification caractéristique de l'unité de contrôle de la pression des pneumatiques, qui doit être amenée à envoyer des données de pneumatiques.

5. Procédé selon l'une quelconque des revendications précédentes, **caractérisé en ce que** l'unité de contrôle de la pression des pneumatiques est amenée à envoyer une information d'état par un signal d'interrogation (A), sachant que l'information d'état est envoyée sous la forme d'un télégramme de données (B1), qui contient l'identification caractéristique et une information sur le fait qui est de savoir si les données de pneumatiques sont stockées dans l'unité de contrôle de la pression des pneumatiques.

6. Procédé selon l'une quelconque des revendications précédentes, **caractérisé en ce que** chaque télégramme de données (D1, D2, D3, D4) de la suite contient une information qui indique de quel numéro de télégramme de données il s'agit.

7. Procédé selon l'une quelconque des revendications précédentes, **caractérisé en ce que** chaque télégramme de données (D1, D2, D3, D4) de la suite contient au moins 4, de préférence au moins 5 octets de données de pneumatiques.

8. Procédé selon l'une quelconque des revendications précédentes, **caractérisé en ce qu'**aucun des télégrammes de données (D1, D2, D3, D4) de la suite ne contient plus de 9 octets de données de pneumatiques, de préférence aucun des télégrammes de données de la suite ne contient plus de 8 octets

9. Procédé d'écriture de données de pneumatiques dans une unité de contrôle de pression de pneumatiques, **caractérisé en ce que** les données de pneumatiques sont reçues sous la forme d'une suite de plusieurs télégrammes de données (E1, E2, E3, E4, E5), qui contiennent respectivement une partie des données de pneumatiques, sachant que chaque télégramme de données (E1, E2, E3, E4, E5) de la suite contient une identification caractéristique de l'unité de contrôle de pression de pneumatiques et au moins un bit de contrôle.

10. Procédé selon la revendication 9, **caractérisé en ce que** l'unité de contrôle de pression de pneumatiques répond à la réception d'un télégramme de données (E1, E2, E3, E4, E5) de la suite respectivement avec un télégramme de données (B3, B4, B5, B6, B7), qui contient l'identification caractéristique de l'unité de contrôle de pression de pneumatiques, au moins un bit de contrôle et une information qui est de savoir si les données de pneumatiques contenues dans le télégrammes de données reçu ont été déposées avec succès dans une mémoire de l'unité de contrôle de pression de pneumatiques.
